Europäisches Patentamt

European Patent Office

Office européen des brevets

(11) Publication number: **0 405 547 A2**

# EUROPEAN PATENT APPLICATION

(21) Application number: 90112350.5

(22) Date of filing: 28.06.90

(51) Int. Cl.5: **B32B 27/18**, B32B 27/32, B65D 81/28

(30) Priority: 30.06.89 JP 168471/89
20.10.89 JP 273476/89

(43) Date of publication of application:
02.01.91 Bulletin 91/01

(84) Designated Contracting States:
AT CH DE FR GB IT LI NL SE

(71) Applicant: MITSUBISHI PETROCHEMICAL CO., LTD.
5-2, Marunouchi 2-chome
Chiyoda-ku Tokyo(JP)

(72) Inventor: Yazaki, Takao
c/o Mitsubishi Petrochemical Co.,Ltd. 1,
Toho-cho
Yokkaichi-shi, Mie(JP)
Inventor: Noro, Masataka
c/o Mitsubishi Petrochemical Co.,Ltd. 1,
Toho-cho
Yokkaichi-shi, Mie(JP)
Inventor: Matsui, Takashi
c/o Mitsubishi Petrochemical Co.,Ltd. 1,
Toho-cho
Yokkaichi-shi, Mie(JP)

(74) Representative: Hansen, Bernd, Dr.rer.nat. et al
Hoffmann, Eitle & Partner Patentanwälte
Arabellastrasse 4 Postfach 81 04 20 20
D-8000 München 81(DE)

(54) Antibacterial laminated film for stretch-packaging.

(57) An antibacterial laminated film for stretch-packaging is disclosed, comprising at least one layer of a composition comprising a resin composition comprising mainly an ethylene resin or a 1,2-polybutadiene resin and from 0.05 to 2.0% by weight, based on the resin composition, of an antibacterial silica or silicate powder as a surface layer, the antibacterial silica or silicate powder-containing layer having a thickness of from 1 to 10 μm. The laminated film exhibits not only excellent antibacterial activity but other properties essentially required as stretch-packaging film, such as excellent film appearance, self-adhesion, and transparency, and properties required for use in automatic stretch-packaging, such as moderate sliding properties and strength.

## ANTIBACTERIAL LAMINATED FILM FOR STRETCH-PACKAGING

### FIELD OF THE INVENTION

This invention relates to a laminated film having antibacterial activity for use in stretch-packaging.

### BACKGROUND OF THE INVENTION

Stretch-packaging of perishable foods, such as vegetables and fruits, fishes, and meats, either as they are or placed on a plastic tray, with a polyvinyl chloride film or a polyethylene film, i.e., so-called prepackaging, has been developed with the expansion of supermarkets and now used for general purposes as an indispensable packaging means.

In addition to the basic requirements for stretch-packaging, such as improvement of appearance of foods, prevention of adhesion of bacteria, and prevention of drying of foods, there has been a demand for stretch-packaging to serve to maintain freshness of foods, and much study is being given packaging materials meeting such a demand. For example, from the standpoint that freshness of foods can be maintained by using sterilized packaging films or containers, various studies have been directed to incorporation of antibacterial agents or antifungal agents into packaging films or containers.

On the other hand, various antibacterial agents have been proposed in the field of general food packaging. Taking it into consideration that an antibacterial agent dissolved out from a packaging film or a container would contaminate the food, nonmigratory substances, e.g., antibacterial silica or silicate, are regarded favorable.

However, films obtained from thermoplastic resin compositions containing inorganic substances such as antibacterial silica or silicate have serious disadvantages, such as greatly deteriorated transparency and greatly reduced self-adhesion required as stretch-packaging film and, therefore, cannot be applied to practical use.

### SUMMARY OF THE INVENTION

The present invention has been accomplished in an attempt to eliminate the above-described problems associated with stretch-packaging films containing nonmigratory antibacterial silica or silicate, i.e., deterioration of film appearance and reduction of self-adhesion.

Accordingly, an object of this invention is to provide a stretch-packaging film having excellent antibacterial properties as well as other properties essentially required for application to automatic stretch-packaging, such as moderate sliding properties, self-adhesion, and sufficient transparency.

The present invention relates to an antibacterial laminated film for stretch-packaging which comprises at least one layer of a composition comprising a resin composition comprising mainly an ethylene resin or a 1,2-polybutadiene resin and from 0.05 to 2.0% by weight, based on the resin composition, of an antibacterial silica or silicate powder as a surface layer, the antibacterial silica or silicate powder-containing layer having a thickness of from 1 to 10 μm.

The laminated film for stretch-packaging according to the present invention exhibits not only excellent antibacterial activity but other properties essentially required as stretch-packaging film, such as excellent film appearance, self-adhesion, and transparency, and properties required for use in automatic stretch-packaging, such as moderate sliding properties and strength. Many of these characteristics are essentially antagonistic with each other. For example, self-adhesion, a property essentially required for stretch-packaging films, is in conflict with sliding properties. It was, therefore, quite unexpected that these requirements could be satisfied at the same time by the present invention.

### DETAILED DESCRIPTION OF THE INVENTION

[I] Resin Composition Comprising Mainly Ethylene Resin or 1,2-Polybutadiene Resin:

Ethylene resins which can be used in the present invention include an ethylene homopolymer; a copolymer of ethylene and other α-olefins, e.g., propylene, butene-1, hexene-1, 4-methylpentene-1, and octene-1; a copolymer of ethylene and a vinyl ester, e.g., vinyl acetate and vinyl propionate; a copolymer of ethylene and a (meth)acrylic acid, e.g., acrylic acid and methacrylic acid, and a metal- crosslinked product thereof; a copolymer of ethylene and a (meth)acrylic ester, e.g., methyl acrylate, ethyl acrylate, methyl methacrylate, and ethyl methacrylate; and mixtures thereof.

Preferred of these ethylene resins are an ethylenevinyl acetate copolymer resin and an ethylene-α-olefin copolymer resin.

In particular, the ethylene-vinyl acetate copolymer resin preferably has a vinyl acetate content of from 5 to 30% by weight and a melt flow rate (MFR) of from 0.3 to 5 g/10 min, and more preferably from 1 to 3 g/10 min, at 190°C. If the vinyl acetate content is less than 5% by weight, sufficient self-adhesion is hardly assured. If it exceeds 30% by weight, these resins have insufficient strength and also excessive softness, resulting in reduction of stretchability on use in stretch-packaging. Resins having an MFR less than 0.3 g/10 min have low elongation, and those having an MFR more than 5 g/10 min have low breaking strength. Accordingly, ethylene-vinyl acetate copolymer resins whose vinyl acetate content and MFR are out of the above ranges have insufficient stretchability on stretch-packaging.

The ethylene-α-olefin copolymer resins preferably comprise from 70 to 99% by weight of ethylene and from 1 to 30% by weight (the remainder) of an α-olefin having from 4 to 8 carbon atoms and have a density of not more than 0.930 g/cm$^3$, and more preferably from 0.900 to 0.920 g/cm$^3$, and an MFR of from 0.1 to 3 g/10 min, and more preferably from 0.5 to 2 g/10 min, at 190°C. If the density exceeds 0.930 g/cm$^3$, the film becomes. rigid, making it difficult for the film to tightly fit the shape of the food to be packaged upon stretch-packaging. If the MFR is less than 0.1 g/10 min, the film has low elongation, and if it exceeds 3 g/10 min, the film has low breaking strength.

1,2-Polybutadiene resins which can be used in the present invention preferably include those containing a 1,2-linkage in a proportion of 90% or more and having a density of from 0.895 to 0.915 g/cm$^3$ and an MFR of from 1 to 6 g/10 min at 150°C.

If desired, various other resins and/or additives may be added to the ethylene resin or 1,2-polybutadiene resin to control stretchability, softness, and the like. Thus, the term "resin composition comprising mainly an ethylene resin or a 1,2-polybutadiene resin" as used herein means a composition containing an ethylene resin or a 1,2-polybutadiene resin as a main component and, if desired, auxiliaries, such as various other resins and additives.

While taking an important role in some cases, the above-described other resins and additives are not essential components in the present invention. For the sake of convenience, these components are included under auxiliaries.

Suitable auxiliaries include rubbers, e.g., an ethylene-propylene copolymer and an ethylene-butene-1-copolymer; and additives which endow films with properties basically required for stretch-packaging films, such as moderate sliding properties, self-adhesion, anti-fogging properties, and antistatic properties. Examples of such additives are esters of an aliphatic alcohol having from 1 to 12 carbon atoms, and preferably from 1 to 6 carbon atoms, and a fatty acid having from 10 to 22 carbon atoms, and preferably from 12 to 18 carbon atoms, e.g., monoglycerol oleate, polyglycerol oleate, glycerol triricinoleate, glycerol acetylricinoleate, methyl acetylricinoleate, ethyl acetylricinoleate, butyl acetylricinoleate, propylene glycol oleate, propylene glycol laurate, pentaerythritol oleate, polyethylene glycol oleate, polypropylene glycol oleate, polyoxyethylene glycerol, polyoxypropylene glycerol, sorbitan oleate, sorbitan laurate, polyethylene glycol sorbitan oleate, and polyethylene glycol sorbitan laurate; and polyalkylene ether polyols, e.g., polyethylene glycol and polypropylene glycol. These additives may be used either individually or in combination of two or more thereof. The additives are used in an amount of from 0.5 to 10% by weight, and preferably from 1 to 5% by weight, based on the ethylene resin or the 1,2-polybutadiene resin.

[II] Antibacterial Silica or Silicate Powder:

Antibacterial silica or silicate powder which can be used in the present invention is fine porous natural or synthetic silica, comprising mainly silicon dioxide such as silica gel, which adsorbs at least one kind of metallic ions having antibacterial activity selected from a silver ion, a copper ion, a zinc ion, and a tin ion, or fine porous natural or synthetic silicate, comprising mainly aluminosilicate such as zeolite, which holds at least one kind of metallic ions as described above at the ion-exchangeable sites thereof.

3

An antibacterial silica or silicate powder which is particularly preferred in the present invention has a specific surface area of not less than 150 m$^2$/g, and preferably not less than 400 m$^2$/g, based on anhydrous substance, and an average particle size of not greater than 10 $\mu$m, and more preferably from 1 to 5 $\mu$m.

[III] Antibacterial Silica or Silicate Powder-Containing Layer:

The above-described antibacterial silica or silicate powder is incorporated into the resin composition comprising mainly an ethylene resin or a 1,2-polybutadiene resin to constitute an antibacterial silica or silicate powder-containing layer of the laminated film according to the present invention.

The amount of the antibacterial silica or silicate powder in the ethylene resin or 1,2-polybutadiene resin composition ranges from 0.05 to 2.0% by weight, and preferably from 0.1 to 1.5% by weight, based on the resin composition. If it is less than 0.05% by weight, antibacterial properties cannot be obtained. If it exceeds 2.0% by weight, no further antibacterial activity can be expected, and transparency and adhesiveness of the film are greatly deteriorated.

The antibacterial silica or silicate powder-containing layer should have a thickness of from 1 to 10 $\mu$m. If the thickness is less than 1 $\mu$m, the antibacterial silica or silicate particles are exposed on the film surface, making the film surface rough, resulting in serious deterioration in transparency and adhesion. On the other hand, if the thickness exceeds 10 $\mu$m, transparency required for stretch-packaging films is so reduced that the packaged food is hardly seen through the film.

Antibacterial activity of the antibacterial laminated film for stretch-packaging according to the present invention can further be improved by subjecting the surface of the antibacterial silica or silicate powder-containing surface layer to a corona discharge treatment. A corona discharge treatment can be carried out at a rate of from 30 to 500 W/m$^2$/min by means of a known corona discharge apparatus, e.g., a vacuum tube type and a thyristor type.

[IV] Antibacterial Laminated Film for Stretch-Packaging and Process for Producing the Same:

The antibacterial laminated film for stretch-packaging according to the present invention comprises at least one antibacterial silica or silicate powder-containing layer as a surface layer. This means that at least one side of the laminated film should be the antibacterial silica or silicate powder-containing layer. As long as this condition is satisfied, the film may further comprise other layers fitting the purpose of the present invention, with the antibacterial silica or silicate powder-containing layer as a surface layer either on one side or both sides thereof. The film may also contain additional antibacterial silica or silicate powder-containing layer as an interlayer of the laminate structure.

Layers which can be laminated with the antibacterial silica or silicate powder-containing layer typically include those functioning to impart or improve various properties demanded for stretch-packaging films, for example, tear strength and heat-sealability. Examples of such layers are those comprising at least one resin selected from olefin polymer resins, e.g., ethylene-$\alpha$-olefin copolymer resins (e.g., ethylene-propylene copolymer, ethylene-butene-1 copolymer, ethylene-hexene-1 copolymer, ethylene-4-methylpentene-1 copolymer, and ethylene-octene-1 copolymer), propylene-$\alpha$-olefin copolymer resins (e.g., propylene-ethylene copolymer, propylene-butene-1 copolymer, and propylene-ethylene-butene-1 copolymer), ethylene-vinyl acetate copolymer resins, and stereoregular butene-1 resins (e.g., polybutene-1 and butene-1-ethylene copolymer); or a resin composition comprising these resins and the above-mentioned additives.

Examples of layers which can be laminated for the purpose of imparting or improving gas permeability or heat resistance of the film for stretch-packaging include those comprising polyamide resins, and particularly nylon 12, i.e., a homo- or copolymer of $\omega$-laurolactam.

These layers other than the antibacterial silica or silicate powder-containing layer may be used either singly or in combination of two or more thereof to provide a laminated sheet composed of two or more layers with the antibacterial silica or silicate powder-containing layer as a surface layer. In particular, a three-layered laminate comprising an interlayer containing the above-described other resins, a surface layer comprising mainly an ethylene resin or a 1,2-polybutadiene resin on one side thereof, and the antibacterial silica or silicate powder-containing surface layer on other side thereof is preferred in view of suppressed deterioration of transparency and self-adhesion.

The antibacterial laminated film for stretch-packaging according to the present invention preferably has a thickness of from 8 to 30 $\mu$m, with the thickness of the antibacterial silica or silicate powder-containing layer being from 1 to 10 $\mu$m.

The antibacterial laminated film for stretch-packaging according to the present invention can be produced by various known methods commonly employed for the production of general laminated films, and particularly laminated films for stretch-packaging. For example, each resin or resin composition constituting each layer is laminated together and molded by a known manner, such as co-extrusion or extrusion lamination through a ring die or a T-die using a plurality of extruders.

The present invention is now illustrated in greater detail with reference to Examples, but it should be understood that the present invention is not deemed to be limited thereto. All the percents, parts, and ratios are by weight unless otherwise indicated.

## EXAMPLE 1

1) A resin composition comprising 70% of polybutene-1 (density: 0.915 g/cm$^3$; MFR at 190°C: 1.8 g/10 min; "MO 200" produced by Shell Chemical Co.), 15% of a propylene-ethylene-butene-1 random copolymer resin (ethylene content: 2.0%; butene-1 content: 13.0%; density: 0.896 g/cm$^3$; MFR at 230°C: 5.0 g/10 min), and 15% of an ethylene-vinyl acetate copolymer resin (vinyl acetate content: 15.0%; MFR at 190°C: 2.0 g/10 min) was kneaded in an extruder (diameter: 65 mm; L/D ratio: 25) at 185°C to prepare a resin composition for an interlayer.

2) A resin composition comprising 97% of an ethylene-vinyl acetate copolymer resin (vinyl acetate content: 15%; MFR at 190°C: 2.0 g/10 min), 2.0% of monoglycerol oleate ("Rikemal OL 100" produced by Riken Vitamin Oil Co., Ltd.), and 1.0% of an antibacterial zeolite powder which was prepared by A type zeolite (specific surface area: 690 m$^2$/g; average particle size: 2 μm) having held 5% (on a water-free basis) of a silver ion was kneaded in an extruder (diameter: 50 mm; L/D ratio: 25) at 160°C to prepare a resin composition for an antibacterial silicate powder-containing surface layer.

3) A resin composition comprising 98% of the same ethylenevinyl acetate copolymer resin as used in 2) above and 2.0% of the same monoglycerol oleate as used in 2) above was kneaded in an extruder (diameter: 50 mm; L/D ratio: 25) at 160°C to prepare a resin composition for another surface layer.

4) The three resin compositions prepared above were fed to a three-layered ring die and extruded at a die temperature of 185°C and inflated at a blow-up ratio of 5.0 to obtain a stretch-packaging laminated film having a total thickness of 14 μm, comprised of a 4 μm thick interlayer and a 5 μm thick surface layer on each side thereof.

Physical characteristics, suitability to stretch-packaging, and antibacterial activity of the resulting film were evaluated according to the following test methods. The results obtained are shown in Table 1 below.

### 1) Haze:

Measured in accordance with JIS K6714.

### 2) Self-Adhesion:

Two specimens of the film cut to a size of 10 mm x 20 mm were superposed, and a load of 20 kg was applied thereon for 2 minutes. After relieving the load, an adhesive strength under shear was measured by means of a Schopper tensile testing machine at a rate of pulling of 500 mm/min.

### 3) Stretch-Packaging Suitability:

Fish were placed on a foamed polystyrene tray and stretch-packaged with the film by using an automatic stretch-packaging machine "A-18x" manufactured by Fuji Pack System Co., Ltd. at a rate of 29 packages/min.

### 4) Antibacterial Activity:

On a specimen of the film cut to a size of 5 cm x 5 cm was dropped 1 mℓ of an Escherichia coli cell

suspension containing about $10^5$ cell/mℓ, and the film was preserved at 35°C. The microbial cells on the film were washed off with an SCDLP agar medium immediately after or 24 hours after the dropping of the cell suspension, and number of cells in the washing was measured by a plane culture method. Where the number of cells after 24 hours' preservation was 10 or less and out of the measurable range, the specimen was recognized to be antibacterial. Where the number of cells after 24 hours' preservation was substantially the same as that counted immediately after the dropping of the cell suspension, the specimen was recognized to be non-antibacterial.

EXAMPLE 2

A stretch-packaging laminated film was produced in the same manner as in Example 1, except that the antibacterial silicate powder-containing surface layer was prepared from a resin composition comprising 97.5% of the same ethylene-vinyl acetate copolymer resin as used in Example 1, 2.0% of the same monoglycerol oleate as used in Example 1, and 0.5% of the same antibacterial zeolite as used in Example 1. Results of evaluations on the resulting film are shown in Table 1.

EXAMPLE 3

A stretch-packaging laminated film was produced in the same manner as in Example I, except for preparing the interlayer from a resin composition comprising 50% of the same polybutene-1 as used in Example 1, 35% of a butene-1-ethylene copolymer resin (ethylene content: 10%; MFR at 190°C: 0.2 g/10 min), and 15% of the same propylene-ethylene-butene-1 random copolymer resin as used in Example 1, changing the thickness of the interlayer to 8 μm, preparing the antibacterial silicate powder-containing surface layer from the same resin composition as used in Example 2, and changing the thickness of each surface layer to 2 μm. Results of evaluations on the resulting film are shown in Table 1.

EXAMPLE 4

A resin composition for an interlayer having the same composition as used in Example 3 was kneaded in an extruder of the same type at 240°C. On the other hand, each of the same resin compositions for the surface layers as used in Example 2 was kneaded in an extruder of the same type at 200°C. The three resin compositions were fed to a three-layered T-die to obtain a stretch-packaging laminated film composed of a 8 μm thick interlayer and a 2 μm thick surface layer on each side thereof. Results of evaluations on the resulting film are shown in Table 1.

EXAMPLE 5

A stretch-packaging laminated film was produced in the same manner as in Example 4, except for preparing the antibacterial silicate powder-containing surface layer from a resin composition comprising 96% of the same ethylene-vinyl acetate copolymer resin as used in Example 1, 2.0% of the same monoglycerol oleate as used in Example 1, and 2.0% of the same antibacterial zeolite as used in Example 1. Results of evaluations on the resulting film are shown in Table 1.

EXAMPLE 6

A stretch-packaging laminated film was produced in the same manner as in Example 1, except for preparing the antibacterial silicate powder-containing surface layer from a resin composition comprising 97.7% of the same ethylene-vinyl acetate copolymer resin as used in Example 1, 2.0% of the same monoglycerol oleate as used in Example 1, and 0.3% of the same antibacterial zeolite as used in Example 1 and subjecting the antibacterial silicate powder-containing surface layer of the resulting laminated film to a corona discharge treatment at a rate of 80 W/m²/min. Results of evaluations on the resulting laminated film are shown in Table 1.

## EXAMPLE 7

A stretch-packaging laminated film was produced in the same manner as in Example 4, except for preparing the antibacterial silicate powder-containing surface layer from a resin composition comprising 96% of an ethylene-octene-1 copolymer resin (octene-1 content: 11.0%; density: 0.920 g/cm³; MFR at 190°C: 1.0 g/10 min), 1.0% of the same monoglycerol oleate as used in Example 1, 2.0% of glycerol triricinoleate ("Seisei Himashiyu" produced by Itoh Oil Mfg. Co., Ltd.), and 1.0% of the same antibacterial zeolite as used in Example 1 and preparing the other surface layer from a resin composition comprising 97% of the above-described ethylene-octene-1 copolymer resin, 1.0% of the above-described monoglycerol oleate, and 2.0% of the above-described glycerol triricinoleate. Results of evaluations on the resulting film are shown in Table 1.

## EXAMPLE 8

A stretch-packaging laminated film was produced in the same manner as in Example 1, except for preparing the antibacterial silicate powder-containing surface layer from a resin composition comprising 96% of a 1,2-polybutadiene resin (density: 0.906 g/cm³; MFR at 150°C: 3.0 g/10min; "RB 820" produced by Japan Synthetic Rubber Co., Ltd.), 1.0% of the same monoglycerol oleate as used in Example 1, 2.0% of the same glycerol triricinoleate as used in Example 7, and 1.0% of the same antibacterial zeolite as used in Example 1, and preparing the other surface layer from a resin composition comprising 97% of the above-described 1,2-polybutadiene resin, 1.0% of the above-described monoglycerol oleate, and 2.0% of the above-described glycerol triricinoleate. Results of evaluations on the resulting film are shown in Table 1.

## EXAMPLE 9

A stretch-packaging laminated film was produced in the same manner as in Example 2, except that an antibacterial silica gel having adsorbed a silver ion ("Clean P-2" produced by Nippan Kenkyujo Co., Ltd.) was used in place of an antibacterial zeolite. Results of evaluations on the resulting film are shown in Table 1.

## COMPARATIVE EXAMPLE 1

A resin composition having the same composition as the antibacterial silicate powder-containing layer prepared in Example 1 was extruded at a die temperature of 185°C and inflated at a blow-up ratio of 5.0 to obtain a stretch-packaging film having a thickness of 14 μm. Results of evaluations on the resulting film are shown in Table 1.

## COMPARATIVE EXAMPLE 2

A stretch-packaging laminated film was prepared in the same manner as in Example 1, except for replacing the resin composition for each surface layer with a composition comprising 98% of the same ethylene-vinyl acetate copolymer resin as used in Example 1 and 2.0% of the same monoglycerol oleate as used in Example 1. Results of evaluations on the resulting film are shown in Table 1.

TABLE 1

| | Film Properties | | | |
|---|---|---|---|---|
| Example No. | Haze | Self-Adhesion | Stretch-Packaging Suitability | Antibacterial Activity |
| | (%) | (g/2cm$^2$) | | |
| Example 1 | 4.3 | 220 | Good | Recognized |
| Example 2 | 3.1 | 230 | " | " |
| Example 3 | 2.8 | 230 | " | " |
| Example 4 | 2.5 | 260 | " | " |
| Example 5 | 4.1 | 190 | " | " |
| Example 6 | 3.0 | 250 | " | " |
| Example 7 | 3.3 | 200 | " | " |
| Example 8 | 3.9 | 190 | " | " |
| Example 9 | 3.0 | 230 | " | " |
| Comparative Example 1 | 18.0 | 90 | Poor (incapable of tight packaging due to low adhesiveness) | " |
| Comparative Example 2 | 2.0 | 250 | Good | Not recognized |

EXAMPLE 10

A stretch-packaging laminated film was produced in the same manner as in Example 1, except for preparing the interlayer from nylon 12 ("Daiamid N 1901" produced by Daicel Hüls Co., Ltd.).

The resulting film exhibited antibacterial activity and had a moisture permeability of 360 g/m$^2$•24 hrs as determined according to JIS Z0208. For the sake of comparison, the film obtained in Example 1 had a moisture permeability of 170 g/m$^2$•24 hrs.

While the invention has been described in detail and with reference to specific embodiments thereof, it will be apparent to one skilled in the art that various changes and modifications can be made therein without departing from the spirit and scope thereof.

**Claims**

1. An antibacterial laminated film for stretch-packaging which comprises at least one layer of a composition comprising a resin composition comprising mainly an ethylene resin or a 1,2-polybutadiene resin and from 0.05 to 2.0% by weight, based on the resin composition, of an antibacterial silica or silicate powder as a surface layer, the antibacterial silica or silicate powder-containing layer having a thickness of from 1 to 10 μm.

2. An antibacterial laminated film for stretch-packaging as claimed in Claim 1, wherein said antibacterial silica or silicate powder adsorbs or holds at least one kind of metallic ion selected from a silver ion, a copper ion, a zinc ion, and a tin ion.

3. An antibacterial laminated film for stretch-packaging as claimed in Claim 1, wherein said antibacterial silica or silicate powder has a specific surface area of not less than 150 m$^2$/g and an average particle size of not greater than 10 μm.

4. An antibacterial laminated film for stretch-packaging as claimed in Claim 1, wherein said antibacterial zeolite powder is present in the antibacterial silica or silicate powder-containing surface layer in an amount of from 0.1 to 1.5% by weight.

5. An antibacterial laminated film for stretch-packaging as claimed in Claim 1, wherein said antibacterial silica or silicate powder-containing surface layer is a layer having been subjected to a corona discharge treatment.

6. An antibacterial laminated film for stretch-packaging as claimed in Claim 1, wherein said ethylene resin is an ethylene-vinyl acetate copolymer resin having a vinyl acetate content of from 5 to 30% by weight and a melt flow rate of from 0.3 to 5 g/10 min at 190° C.

7. An antibacterial laminated film for stretch-packaging as claimed in Claim 1, wherein said ethylene resin is a copolymer comprising ethylene and an $\alpha$-olefin having from 4 to 8 carbon atoms and having a density of not more than 0.930 g/cm$^3$ and a melt flow rate of from 0.1 to 3 g/10 min at 190° C.

8. An antibacterial laminated film for stretch-packaging as claimed in Claim 1, wherein said 1,2-polybutadiene resin has a density of from 0.895 to 0.915 g/cm$^3$ and a melt flow rate of from 1 to 6 g/10 min at 150° C.

9. An antibacterial laminated film for stretch-packaging as claimed in Claim 1, wherein said resin composition further comprises from 0.5 to 10% by weight, based on the ethylene resin or the 1,2-polybutadiene resin, of an ester of an aliphatic alcohol having from 1 to 12 carbon atoms and a fatty acid having from 10 to 22 carbon atoms.

10. An antibacterial laminated film for stretch-packaging as claimed in Claim 1, wherein said laminated film further comprises a layer of a resin composition comprising mainly a butene-1 resin.

11. An antibacterial laminated film for stretch-packaging as claimed in Claim 1, wherein said laminated film further comprises a layer of a resin composition comprising mainly a polyamide resin.

12. An antibacterial laminated film for stretch-packaging as claimed in Claim 1, wherein said laminated film has a thickness of from 8 to 30 $\mu$m.